(19) **Europäisches Patentamt**

**European Patent Office**

**Office européen des brevets**

(11) **EP 1 184 658 A2**

(12) **EUROPEAN PATENT APPLICATION**

(43) Date of publication:
06.03.2002 Bulletin 2002/10

(51) Int Cl.⁷: **G01N 9/00**

(21) Application number: 01306984.4

(22) Date of filing: 17.08.2001

| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: **18.08.2000 GB 0020267**<br><br>(71) Applicant: **SG Measurement Limited**<br>**Banstead, Surrey SM7 3JT (GB)** | (72) Inventors:<br>• **Rickward, Roger David**<br>  **Wolverhampton, West Midlands (GB)**<br>• **Argent, David Charles James**<br>  **Banstead, Surrey SM7 3JT (GB)**<br><br>(74) Representative: **Gosnall, Toby**<br>**Barker Brettell, 138 Hagley Road, Edgbaston**<br>**Birmingham B16 9PW (GB)** |
| --- | --- |

(54) **Improvements relating to the measurement of specific gravity/density**

(57) An apparatus arranged to measure specific gravity / density of a quantity of fluid (12), comprising a displacement means (2) arranged to be suspended into the fluid (12) such that it is completely submerged and displaces a portion of the fluid (12), a weight measuring means (4) arranged to measure the resultant force exerted by the displacement means (2) and a processing means arranged to process the resultant force and produce a reading (13) of the specific gravity / density for the fluid (12). The apparatus allows temperature compensation to be performed such that a reading can be made at a first temperature and the specific gravity / density calculated at a second different temperature.

FIG. 1.

EP 1 184 658 A2

## Description

This invention relates to an improved method and apparatus for the measurement of specific gravity / density in particular to the measurement of the specific gravity / density of a liquid.

The specific gravity / density of a liquid is an important material parameter for many situations. The mixing of two or more liquids is one such situation in which specific gravity / density is important.

Many processes rely on the mixing of two or more liquids with the result of the mixing process being affected by the specific gravity / density of the liquids being mixed. Specific gravity / density varies with temperature and can therefore vary quite markedly between sites.

Specific gravity / density can be difficult to measure and is therefore often measured in a laboratory, which may be at quite different conditions to those obtained where the mixing process takes place. Therefore, due to the temperature effect the specific gravity / density of the sample measured in the laboratory may be quite different to the specific gravity / density of the same liquid being mixed in the plant.

The specific gravity / density varies according to the constituent components of the liquids as well as the temperature and it is therefore possible for the parameter to vary even at constant temperature. Therefore, if the specific gravity / density is not measured often enough, which may be the case if such measurement is awkward, then the specific gravity / density of the liquids being mixed may no longer correspond to the measured value. Such fluctuations may also occur due to temperature variations.

Therefore, it is convenient to have a simple and accurate measurement of the specific gravity / density to ensure that the mixing of the liquids occurs as desired.

Further, an accurate specific gravity / density measurement may be useful in situations where a liquid is being transported between two places of different conditions; perhaps between a cold environment and a hotter environment. The liquid will expand/contract due to the temperature change, perhaps quite markedly. It is possible to show that there is the same quantity of liquid present despite a change in volume if an accurate reading of the specific gravity / density can be made.

Yet further, having an accurate reading of the specific gravity / density of the water surrounding a ship may allow the ship to be loaded with cargo more safely. If the ship is loaded to its plimsoll line in cold water and then travels to warmer water the ship may sink into the water below its plimsoll line, which may be dangerous. It may be possible to allow for this if the initial specific gravity / density can be calculated.

It will therefore be apparent that the specific gravity / density of a liquid is in some circumstances important to measure.

Prior art methods of measuring the specific gravity / density include providing containers of fixed volume which are used to hold a quantity of test liquid. This filled container is then weighed and the specific gravity / density calculated. However, the accuracy of the measurement depends on the container having precisely the fixed volume. Therefore, damage to the container, perhaps due to wear occurring through use, can lead to inaccuracies. Such containers are often difficult to thoroughly clean which can lead to contamination of subsequent tests by previous ones again leading to inaccuracies.

An example of prior art specific gravity / density measuring apparatus can be seen in US 5 157 968. However, the apparatus shown therein is somewhat complex.

An object of the present invention is to provide a method and apparatus, which is more convenient than prior art methods and apparatus for measuring specific gravity / density.

According to a first aspect of the invention there is provided an apparatus arranged to measure specific gravity / density of a quantity of fluid, comprising a displacement means arranged to be suspended into the fluid such that it is completely submerged and displaces a portion of the fluid, a weight measuring means arranged to measure the resultant force exerted by the displacement means and a processing means arranged to process the resultant force and produce a reading of the specific gravity / density for the fluid.

An advantage of such an apparatus is that it is convenient to suspend the displacement means into a fluid providing a simple apparatus the use of which allows the specific gravity / density to be measured.

Preferably, there is provided a temperature measuring means arranged to measure the temperature of the fluid and provide the fluid temperature to the processing means. Such a temperature measuring means is convenient because it allows a temperature compensated specific gravity / density to be provided. Or indeed, the processing means may be arranged to provide the specific gravity / density of the fluid at a temperature different from the temperature of the fluid.

Conveniently, the temperature measuring means is a thermocouple, but any suitable form of temperature measuring device would be suitable. For instance a glass thermometer or resistance bulb may be used. Indeed, any temperature measuring means that produces a temperature dependent electrical signal may be particularly suitable for this application.

Preferably, the displacement means has a known volume. Although it is possible to calibrate the apparatus using a fluid of known specific gravity / density such that the volume can be determined, and stored (possibly such that the volume was never known to a user) it is convenient to use a displacement means of known volume. Knowing the volume of the displacement means removes a variable from the system and may help to increase the accuracy of the calculated specific gravity / density.

Preferably the weight measuring means is a load cell from which the displacement means is suspended. Such a load cell comprises a Wheatstone Bridge in which one or more of the resistors is provided by a strain gauge. Strain arising from the suspended displacement means causes an output from the load cell, which can be used to determine the force applied to the load cell.

A container may be provided in which to hold the fluid. Such a container is convenient because it allows small samples of the fluid to be tested.

A frame or other support means may support the load cell. Such a frame is advantageous because it is important that the load cell does not move relative to the fluid as the displacement means is lowered into the fluid. Such displacement would lead to inaccuracies in the measurement of the specific gravity / density due to inaccuracies in the weight.

The frame may be adjustable so that the height of the load cell relative to the fluid can be varied. Such a frame is advantageous because it allows the displacement means to be lowered into/raised out of the fluid. Further, such a frame may allow the apparatus to be adjusted to allow measurement for fluids contained in a number of different containers.

The frame may be arranged to a close fit with the displacement means. That is, there may be a small gap between the frame and the displacement means. This is advantageous because it limits the amount of movement that the displacement means can make relative to the frame. Such movement places forces onto the measurement means, which can affect the measured specific gravity / density.

The gap between the frame and the displacement means may be roughly any of the following values: 0.5mm, 1mm, 2mmm, 3mm, 4mm,5mm.

The frame may be a tripod. The displacement means may be a disc. The diameter of the disc may be such that the gap between each of the legs and the disc is small as described above.

Alternatively, or additionally, the apparatus may be arranged to vary the level of the fluid so that the displacement means becomes submerged. This arrangement may be a convenient for allowing the specific gravity / density to be measured.

The apparatus may be arranged to vary the level of the fluid by causing fluid to flow into or out of the container associated with the apparatus.

In some preferred embodiments of the apparatus, the displacement means is suspended from the weight measuring means.

Alternatively, or additionally, the weight measuring means may comprise scales arranged to measure the weight of the fluid. Such an embodiment may be convenient in some arrangements, especially those in which the fluid is held in a container in which the container may be placed on the scales.

Preferably, the displacement means comprises a roughly spherical body. Any shape may be suitable for the displacement means but certain shapes are preferable. For example cylindrical or pear shaped may also be convenient. It is convenient that the displacement means is shaped so that fluids other than that being measured, foreign fluids, (for example air) cannot be trapped as the displacement means enters the fluid. Such trapping of foreign fluids would lead to inaccuracies in the measured specific gravity / density.

Most preferably the displacement means has a volume which is roughly ten raised to an integer X number of cl (where X is any integer).. For instance, the volume of the displacement means may be 1cl, 10cl, 1litre, 10litre. Such a volume makes the calculation of the specific gravity / density more convenient. However, any volume of displacement means may be used if appropriate conversions are made by the processing means.

Further, it will be appreciated that inaccuracies in the specific gravity / density measured by the apparatus due to inaccuracies in the known volume of the displacement means will be lessened if larger volumes of displacement means are provided. Therefore, if greater accuracy is desired it may be convenient to use a larger volume of displacement means.

A calibration means may be provided which allows the apparatus to be calibrated. Such calibration is advantageous since is maintains the degree of accuracy of measurements provided by the apparatus. The calibration means may comprise an input means to the processing means, which may in some embodiments zero (or set a tare) the output. Alternatively, the calibration means may be arranged to prompt a user to perform various actions and in one embodiment prompts the user to suspend weights from the suspender at appropriate times.

The processing means may include an analogue amplifier taking as one or more of its inputs the output from the weight measuring means and being arranged to provide a signal from which the specific gravity / density can be determined.

In some embodiments the output from the temperature measuring means may also be input to the amplifier and the amplifier arranged to output a signal from which a temperature compensated specific gravity / density can be determined.

Alternatively, separate amplifiers may be provided for the temperature measuring means and the weight measuring means.

Alternatively, or additionally, the processing means may comprise a processor, micro-controller or the like. Such a processor can conveniently be arranged to sample the output from the weight measuring means and/or the temperature measuring means and process these outputs to provide a specific gravity / density.

A look up table or the like may be provided enabling the temperature compensated specific gravity / density to be calculated.

A temperature display may be provided.

Conveniently the apparatus is arranged to measure the specific gravity / density of a liquid.

The apparatus may be arranged to measure the specific gravity / density of a fluid at a first temperature and to provide as an output the specific gravity / density of that fluid a second, different, temperature. The first temperature may be measured by the temperature measuring means. Such an arrangement is convenient because it allows a sample of a fluid to be tested and the results of this test used to predict properties of the fluid elsewhere.

The apparatus may be provided with a temperature input. Such an input may allow a user to specify a temperature at which they wish the specific gravity / density to be provided. The temperature input may comprise a dial, keypad, keyboard or the like.

The apparatus may be arranged to measure the specific gravity / density of a flowing fluid.

The displacement means may be arranged within a container having an inlet and an outlet pipe. Such an arrangement is convenient because it allows measurements to be performed on the flowing fluid but can be arranged such that forces exerted onto the displacement means are minimised.

One or more shields may be provided to shield the displacement means from forces exerted by the flowing fluid. The shield or shields may comprise baffle plates. Such shields can help increase the accuracy of the apparatus by helping to prevent forces from the flowing fluid from acting on the displacement means, which would lead to inaccuracies in the measured specific gravity / density.

Alternatively, or additionally, the processing means may be arranged to compensate for forces exerted on the displacement means due to the flowing fluid.

The displacement means may be suspended from a flexible means, such as a wire, or in some embodiments a rigid means such as a rod.

According to a second aspect of the invention there is provided a method of measuring the specific gravity / density of a fluid comprising providing a quantity of fluid to be measured, suspending a displacement means into the fluid such that it is submerged, measuring the resultant force exerted by the displacement means and calculating the specific gravity / density of the liquid.

Such a method is advantageous because it is simpler and more accurate than prior art methods of measuring the specific gravity / density.

Preferably, the method comprises a calibration step, which is advantageous because it helps to ensure the accuracy of the specific gravity / density measurement and gives an immediate display of the specific gravity / density.

The method may include the step of calculating the volume of the displacement means. This is advantageous because it takes into account any damage that has occurred to the displacement means altering its volume.

The calibration step may comprise submerging the displacement means into a fluid of known specific gravity / density and adjusting calculated specific gravity / density to agree with the known specific gravity / density. Advantageously the known specific gravity / density corresponds to roughly 1.00 since this makes the calibrations more convenient.

Alternatively, or additionally, the calibration step may comprise replacing the displacement means with one or more weights of know mass and adjusting the calculated specific gravity / density accordingly. In the most preferred embodiment three weights are used to calibrate the calculation: a first weight may be corresponding to roughly the start of the range of the calculation span; a second may be corresponding to roughly the middle of the range of the calculation span; and a third may be corresponding to roughly the end of the range of the calculation span.

Conveniently the method comprises using a displacement means having a volume roughly corresponding to a number of multiples of 1cl. Perhaps roughly any of the following may be convenient: 1cl, 10cl, 11, 10 litre. Using a displacement means with any of the preceding volumes is convenient because it simplifies the processing that must be performed.

When the displacement means is submerged into the fluid a volume of fluid equal to the volume of the displacement means is displaced. This volume of fluid has a weight, which is proportional to its density. The displacement means will experience a buoyancy force up out of the fluid equal to the weight of the fluid displaced by the displacement means. Thus, the weight of the displacement means (when in the fluid) gives a direct indication of the density of the fluid since the volume of the displacement means is known. If the volume of the displacement means is a number of multiples of 1c1 then the weight will correspond to the density of the fluid but will simply be one or more powers of ten shifted.

Conveniently a range of displacement means are provided allowing a number of ranges of specific gravity / density to be measured. It will be appreciated that for the method to function the displacement means must sink in the fluid being tested. Therefore, as the specific gravity / density of the fluid being tested is alters a range of displacement means of different mass becomes appropriate.

The fluid under test may be held in a container providing a more convenient method.

Preferably the method is used to determine the specific gravity / density of a liquid.

The method may comprise measuring the specific gravity / density of a flowing fluid in line.

Shields may be provided in association with the displacement means. Such shields may help to prevent forces arising from the flowing fluid from acting upon the displacement means.

The method may comprise causing the flowing fluid to flow in to a container in which the displacement means is provided. Again, such an arrangement can help to isolate the displacement means from forces caused by the flowing fluid.

Conveniently, the method comprises causing a head of fluid to exist between the bottom of the container and the displacement means. Such a head of fluid helps to counteract the force of the fluid flowing into the container, and helps to ensure that the displacement means is removed from the flowing fluid.

According to a third aspect of the invention there is provided a kit of parts to provide the first or second aspect of the invention.

According to a fourth aspect of the invention there is provided a fluid specific gravity / density measuring apparatus comprising a body arranged to held in a user's hand, said body having a displacement means support member extending therefrom with a displacement means on an end opposite the body the apparatus being arranged to provide a reading of the specific gravity / density when the displacement means is submerged into a fluid.

Preferably a temperature sensing means is provided and arranged to measure the temperature of a fluid in which the displacement means is submerged. Such a sensing means is advantageous because it allows the specific gravity / density reading to be temperature compensated.

An input means may be provided arranged to allow a desired temperature to be input to the apparatus. This is advantageous since it allows a reading for the specific gravity / density to be provided at a temperature other than that measured by the temperature sensing means.

The displacement means support member may be a rigid member such as a rod. This is convenient because it provides a robust apparatus that especially suitable for hand held use.

Conveniently the displacement means support member has mounted thereon a marker. The marker may conveniently mark the point to which the displacement means support member should be submerged into a fluid. It is convenient if the volume of the fluid displaced is constant and known. In this embodiment the volume of fluid displaced by the displacement means support member may be significant and it therefore convenient to provide the marker so that the it can be submerged to roughly to correct amount.

The body may comprise a casing. This is advantageous because it provides a robust apparatus.

Body support means may be provided and arranged to mechanically support the body during use of the apparatus.

In one embodiment the body support means comprises arms that extend away from the body. Such arms provide a simple mechanical means to support the body.

In another embodiment the body support means comprise a mounting bracket that allow the body to be mounted on a support. The mounting bracket may comprise a clamp.

The mounting bracket may further comprise an adjustment means allowing the body to be raised and lowered. The adjustment means may comprise a wheel, a convenient user operable means.

According to a fifth aspect of the invention there is provided a method of measuring the specific gravity / density of a fluid comprising providing a hand-held apparatus with a displacement means extending therefrom, arranging for the displacement means to be submerged into the fluid, and measuring the force exerted on the apparatus by the fluid displaced by the displacement means.

Such a method is convenient since it provides a method that can be can be carried out relatively easily and therefore, make measurement of specific gravity / density convenient.

According to a fifth aspect of the invention there is provided an apparatus arranged to measure the mass of a quantity of fluid held in a container, comprising a displacement means arranged to be suspended into the fluid such that a portion of the displacement means is submerged and displaces a portion of the fluid, a weight measuring means arranged to measure the resultant force exerted by the displacement means and a processing means arranged to process the resultant force and produce a reading of the mass of the fluid.

Any of the features provided in relation to the earlier aspects of the invention may be used in relation to the fifth aspect of the invention.

The apparatus of the fifth aspect of the invention may be used in addition or separately from any of the previous aspects of the invention.

According to a sixth aspect of the invention there is provided a method of determining the mass of a quantity of liquid as described herein.

There now follows by way of example only a detailed description of the invention with reference to the accompanying drawings of which:

**Figure 1** shows a schematic diagram of an apparatus for measuring the specific gravity / density of a fluid;

**Figure 2** shows a circuit diagram showing a weight measuring means of one embodiment of the invention;

**Figure 3** shows a schematic diagram of a second embodiment of the present invention;

**Figure 4** shows a schematic diagram of a further embodiment incorporating the invention;

**Figure 5** shows a further, hand held, embodiment of the present invention;

**Figures 6 and 7** show refinements of the embodiment shown in Figure 5;

**Figure 8** shows a further embodiment of the present invention; and

**Figure 9** shows a further embodiment of the present invention.

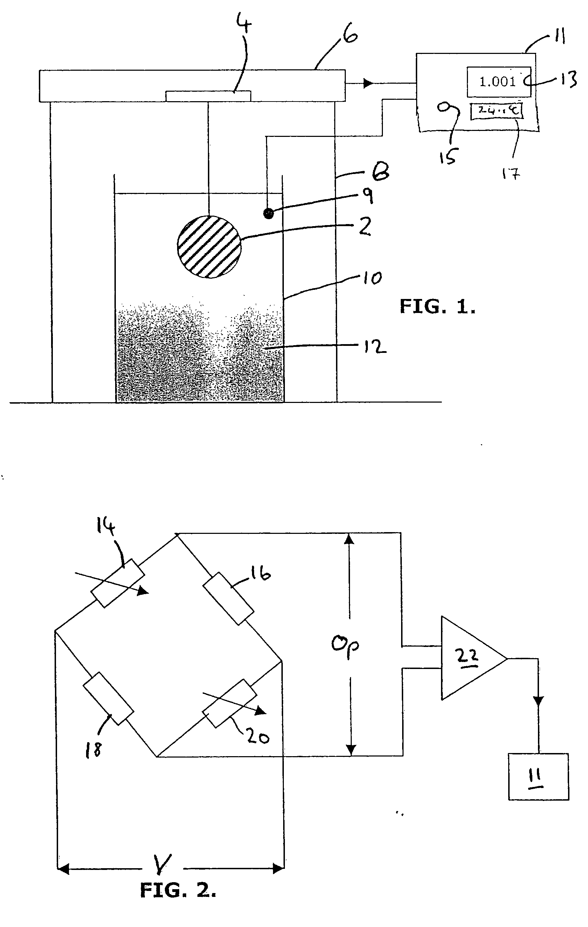

In the apparatus of Figure 1 a displacement means 2 is suspended by a fine wire or similar suspender from a weight measuring means which in this example is a load cell 4. The load cell 4 is attached to a support 6 forming part of a frame 8 arranged to support the displacement means 2 such that substantially zero vertical displacement of the displacement means occurs due to movement of the frame 8.

In this embodiment a container 10 is provided in which a quantity of test fluid is held, which in this case is a liquid 12. The displacement means 2 has a density higher than the liquid 12 and so sinks in the liquid 12.

A temperature sensing means which in this embodiment is a thermocouple 9 is also submerged into the liquid 12 enabling the actual temperature of the liquid to be taken. The output from the load cell 4 is fed into a processing means 11 which incorporates a display 13 is provided to display the calculated specific gravity / density. In this embodiment the display comprises a 3½ digit digital display. A temperature display 17 is also provided, which in this example displays temperature to 0.1 of a degree.

The load cell 4 comprises a Wheatstone Bridge, which although well known is shown for the avoidance of doubt in Figure 2. The bridge comprises four resistors 14,16,18,20 arranged in a bridge. Two of the resistors 14,20, opposite each other in the bridge, are provided by strain gauges, which accurately measure displacement on the support 6 due to changes in the weight of the displacement means 2. Displacement of the support 6 causes the value of the resistors/strain gauges 14,20 to alter. The bridge is excited by a voltage V and an output is taken from the bridge as a voltage Op. It will be readily apparent to the skilled person how Op is related to V.

In this embodiment the output from the bridge Op is fed to an analogue amplifier represented schematically at 22, which produces an output corresponding to the specific gravity / density of the liquid 12 and is displayed on the display 13. In Figure 2 the thermocouple 9 is not shown but in the described embodiment the output from the thermocouple is fed into the amplifier 12 so that the display 13 is caused to display a temperature compensated specific gravity / density.

The choice of the load cell is governed by three factors: i. the weight of the displacement means, ii. the accuracy required and iii. the use to which the apparatus will be put.

i. The load cell must be able to support the weight of the displacement means.

ii. The closer the weight of the displacement means to the rated value of the load cell, the more accurate the system. For example, the arrangement of the displacement means having a weight of 1.0 kg and the load cell had a capacity of 1.0 kg would be more as accurate as a displacement means of the same weight but with a load cell of 2.0 kg capacity. (This assumes that each of the load cells has an equal number of output divisions over the working range.)

iii. The use covers whether the apparatus will be used within the laboratory or field. In the laboratory, a low overload capacity may be suitable since it is likely that the laboratory environment will be less harsh. For field use, a higher overload capacity may be desirable to protect against overload strains, etc.

An input means 15 in provided to the processor which a user of the apparatus can adjust to specify at what temperature they require the specific gravity / density for the fluid to be provided.

To perform a measurement the device must first be calibrated, which can be achieved in a number of ways, two of which will be described herein. In the first method of calibration the container 10 is filled with a fluid having a known specific gravity / density and the displacement means 2 is fully submerged therein. The gain/offset on the amplifier 22 is adjusted until the reading on the display means shows the known specific gravity / density.

In the second method of calibration the container 10 is removed from the frame 8 and the displacement means 2 is replaced in turn by three weights. A displacement means 2 has a range of specific gravities that it will be able to measure. There will therefore be a lower end of the range, an upper end and a mid point. When a fluid having a specific gravity / density corresponding to the low end of the range is being measured the buoyancy force exerted on the displacement means 2 will be the lowest for that range and therefore, the load cell will output its highest value.

As an example if a displacement means having a mass of 1.1kg and a volume of 1litre is submerged into a fluid having a specific gravity / density of 1.0 (assuming $G=10m/s^2$) then a buoyancy force of 10N will be exerted on the displacement means. Therefore, there will be a resultant downward force measured by the load cell of 1N.

If the fluid were replaced with one have a specific gravity / density of 0.9 then the buoyancy force exerted on the displacement means drops to 9N and the resultant downward force seen by the load cell rises to 2N.

If the fluid were replaced with one having a specific gravity / density of 1.05 then there would be a buoyancy force of 10.5N and there would therefore be a resultant downward force of 0.5N.

If the fluid were replaced with one having a specific gravity / density of 1.1 then the buoyancy force rises to 11N, equal to the mass of the displacement means. There would therefore, be a resultant downwards force of 0N and the displacement means would float. That particular displacement means could not therefore be used to measure the specific gravity / density for that fluid.

The weights used to calibrate the apparatus are arranged to apply a force to the load cell corresponding to the resultant force of the displacement means in a fluid having a specific gravity / density at the lower, upper, or mid point of the range. Taking the three points in the example just given as the lower (specific gravity / density of 0.9), mid (specific gravity / density of 1.0) and upper (specific gravity / density of 1.05) of a range for a particular displacement means the resultant forces seen by the load cell could be simulated by masses of 1.1kg (1N), 1.2kg (2N) and 1.05kg (0.5N). Such masses would be suspended from the load cell and calibration achieved. The skilled person will appreciate that these masses are an approximation due to the rounding of the value of gravity.

The processing means is arranged to enter a calibration mode which prompts the user to suspend a particular weight from the suspender.

Once the device has been calibrated the specific gravity / density of fluids can be measured by immersing the displacement means 2 into a fluid 12. The reading on the display means 13 corresponds to the specific gravity / density of the fluid 12.

The thermocouple 9 measures the actual temperature of the fluid being tested. This temperature reading can be used to accurately give the specific gravity / density of the fluid 12 at any temperature. This feature is useful if the specific gravity / density measurement is being performed remotely from the actual process using the fluid, which may be at a different temperature. To perform this the processing means is provided with a further input 15 which can receive the desired temperature at which the specific gravity / density should be given (i.e. the actual temperature of the fluid of interest). The thermocouple 9 measures the temperature of the test fluid 12 and the processing means shifts the specific gravity / density of the fluid 12 to the value it would be for the fluid at the temperature of interest.

The specific gravity / density for a blend of chemicals is often calculated at a reference temperature e.g. 15.6°C (60°F). When blending, the process temperature could be at any level. In order to achieve the correct specific gravity / density for the given reference temperature a calculation is made by the apparatus. This calculation is based on specific gravity / density vs. temperature data and can be used to ensure that the final blend has the required specific gravity / density no matter what the temperature.

After one test has been performed the apparatus is free to test further fluids. However, to ensure the test results are not contaminated the displacement means should be cleaned/washed between each test. Because the displacement means has a simple shape it is relatively easy to clean.

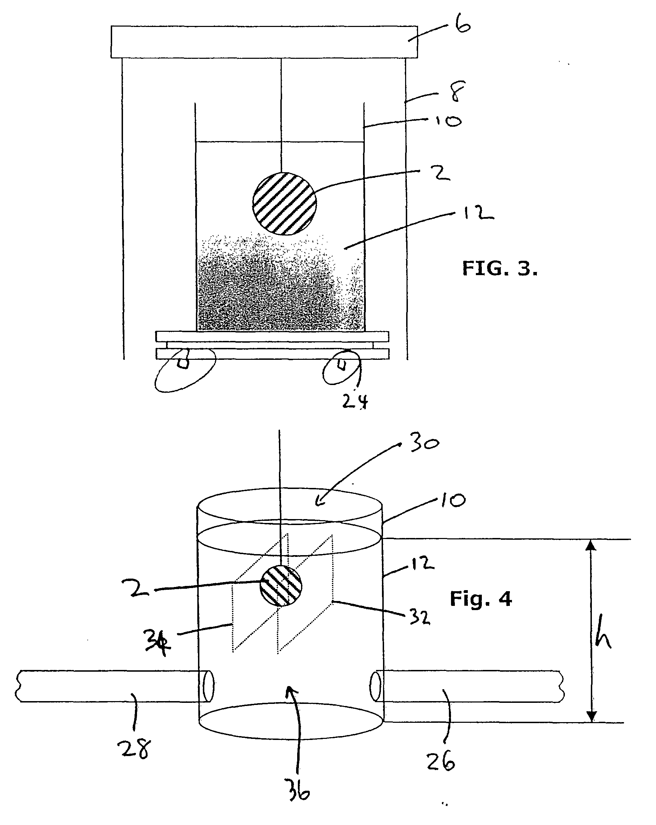

A second embodiment of the apparatus is shown in Figure 3 and like parts have been referenced with the same reference numerals. For the sake of clarity the thermocouple, processing means and display have been omitted.

In this embodiment the weight measuring means comprises a scale 24 situated beneath the container 10 rather than the load cell 4 of the first embodiment. The scale 24 may be any commercially available scale. The displacement means 2 is again suspended into the container from a suspender attached to a support 6. If the scale is tared or zeroed so that it does not show the mass of the container 10 and fluid 12 the reading on the scale 24 is linked to the specific gravity / density of the fluid in the container. This is particularly so if the volume of the displacement means 2 is a number of multiples of 1c1 (although there may be powers of 10 difference).

Indeed, for the reading on the scale to give a reading of the specific gravity / density the volume of the displacement means must be 100cc or 1000cc, which will result in a true grammes/specific gravity / density reading. Other volumes of displacement means would need a conversion factor applying to the reading on the scale.

If a weighing scale were used rather than a load cell then similar considerations would apply, but the scale must be able to withstand the weight of the liquid and the container plus the load when the displacement means is submerged.

The scale 24 does not measure the full weight of the displacement means 2 since the displacement means 2 is suspended by the support 6. Therefore, the scale 24 only measures the mass of fluid displaced by the displacement means 2. The density of a body is given by:

$$\rho = \frac{\text{mass}}{\text{volume}}$$

A body suspended in the container of fluid 12 has a downward weight of:

$$w_d = m_d g$$

($m_d$ = mass of displacement means). There is an upwards force resulting from the displacement of the fluid of:

$$f = \rho_f \, v_d$$

( $\rho_f$ denotes density of fluid, $v_d$ denotes volume of displacement means )

The support 6 therefore experiences a downward force of:

$$f = m_d g - \rho_f \upsilon_f g$$

The scale 24 sees a force in addition to that of the weight of the container and fluid originating from the actual weight of the displacement means ($m_d$g) minus the force held by the support 6, i.e. the weight of the container and fluid plus a force of f=$\rho_f v_d$g.

Since the volume $V_d$ is known then the density of the fluid is given by the reading on the scale. It will be realised that it is convenient to arrange the volume of the displacement means to be 1litre to simplify the calculation. However, this need not be so. Further, it will be appreciated that by zeroing the scale 24 with the container of fluid thereon then the scale 24 will give a direct reading in relation to $\rho_f v_d$ and the weight of the container and fluid will not need subtracting.

It will be appreciated that if in the apparatus of the first embodiment is used then a container of fluid is not essential and the displacement means can simply be suspended in any volume of fluid. The displacement means could for instance be suspended in the sea, or a bulk container of the like.

It is possible to arrange an apparatus according to the invention to calculate specific amounts of fluids that must be added to a mixing process. For example if it is known that a predetermined volume of fluid must be mixed but only its mass can be measured then an apparatus according to the invention can be used to determine the required mass. This is especially a problem for processes in which the temperature is variable since this is likely to affect the density of the fluids and hence the relationship between the mass and volume. This problem can be overcome using an apparatus with a temperature measuring means, which can be used to measure the actual temperature of the fluid. Assuming that the mass of the fluid can be measured the device can be used to calculate the density of the fluid. The temperature measuring means can be used to adjust the process parameters to the correct temperature and the display means can be arranged to output a mass of fluid to be added to give the desired volume of fluid. Further, it will be appreciated that if the volume of fluid is easier to measure than the mass but the mass is the critical value a similar apparatus could be used to determine the correct volume to be added to give the correct mass.

It will be appreciated that an important aspect of this process control embodiment is the temperature compensation, which allows density measurements to be related to a different temperature than the actual temperature of any fluids in the process. Generally, a process will be specified at a specific temperature, which is unlikely to be the temperature at which the process is performed. Therefore, an apparatus according to the present invention could be used to instruct an operator how much material should be input after compensations for temperature differences have been made.

In another embodiment, as shown in Figure 4 the apparatus may be arranged to measure the specific gravity / density of a flowing fluid in line. To achieve this the container 12 is provided with a fluid inlet 26 and a fluid outlet 28. A pair of baffle plates 32, 34 is provided such that the displacement means 2 is situated between the plates. This arrangement is such that the displacement means 2 is shielded from forces occurring due to the flow of fluid into and out of the container 12; the skilled person will appreciate that any forces exerted onto the displacement means by the flow of fluid will affect the specific gravity / density measurement.

In the embodiment shown in Figure 4 the container 12 is open at its upper end 30. This open end allows the wire, etc. supporting the displacement means to pass unrestricted out of the container 12. The wire must not be restricted or the specific gravity / density measurement may be affected.

In order, that the fluid flowing into the container does not flow out through the open upper end 30 the head of fluid h within the container 12 should be of a sufficient height to counter act the force of the fluid flowing into the container. Having a head of fluid within the container 12 allows the displacement means to be situated above a region 36 between the inlet 26 and outlet 28 pipes where the fluid flow will be strong. In the region 36 the displacement means 2 may experience forces which could affect the specific gravity / density measurement.

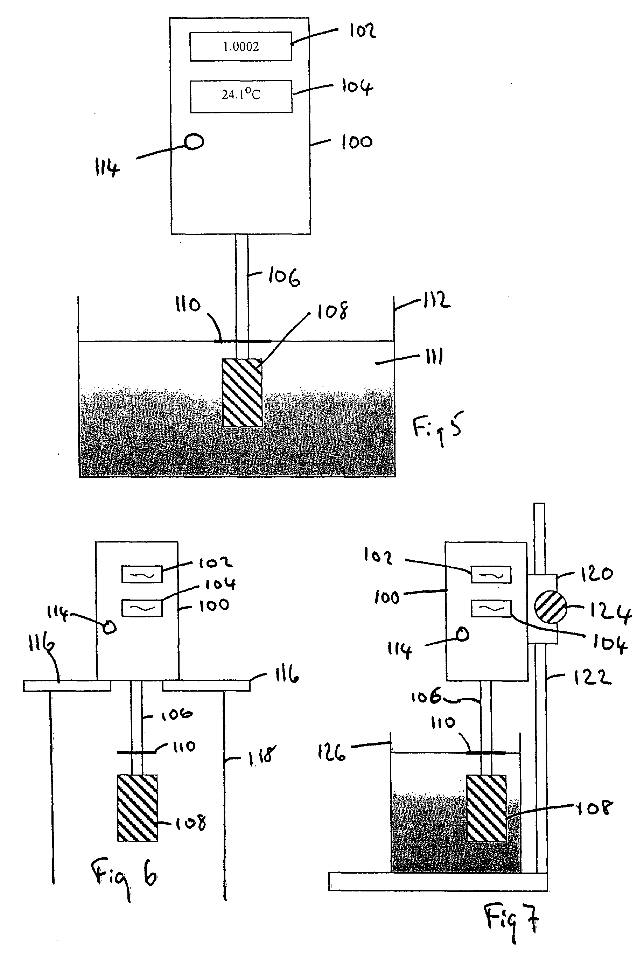

Figure 5 shows a further embodiment of the present invention that is arranged to be hand held. A casing 100 is provided to hold the electronics of the system. Two LCD digital readouts 102, 104 are provided and respectively provide a read-out of the specific gravity / density and temperature. A displacement means support member, in this case a rod 106, extends from a bottom region of the casing 100 and has a displacement means 108 at a distal end thereof. A marker 110 is provided at a predetermined point of the rod, comprising in this instance a pair of wires extending perpendicularly to the rod 106.

In use, a user submerges the displacement means 108 into the a liquid 111, in this case held in a container 112, so that the marker 110 sit level with the surface of the liquid 111. The marker 11 is used to ensure that the volume of the displacement means is fixed. (In this embodiment the rod has a volume which is significant enough to effect the measurement of the specific gravity / density. Therefore, providing the marker 110 helps to ensure that the displacement means 108 and the portion of the rod 106 submerged into the liquid 111 have a fixed volume).

A thermocouple (not shown) acts a temperature measuring means and is positioned on a surface of the displacement means 108. An input means 114 allows a desired temperature to be set so that the measured specific gravity / density reading 102 can be set to show the specific gravity / density reading at the desired temperature. This is possible due to the provision of the temperature measuring means.

The rod 106 is a rigid member and acts upon a force sensor within the casing 100. The electronics within the casing 100 are tared so that the display 102 registers 1.0000 with a liquid having an specific gravity / density of 1.

If the handheld device is moved whilst a measurement is being taken the specific gravity / density reading will be affected due the friction forces between the displacement means and the liquid 111 acting on the force sensor. Thus, it is possible to provide the handheld device with accessories that can help to remove such problems.

Body support means in this case arms 116 can be arranged to extend from a bottom region of the casing 100, as shown in Figure 6. It is then possible to rest the casing 100 above a vessel 118 so that the arms 116 rest upon the top surface of the vessel. Therefore, the casing is steadied relative to the vessel 118.

In another embodiment the body support means comprises a mounting bracket 120 is fixed to the casing 100 so that it can be secured to a clamp 122. A hand-wheel 124 is provided so that the casing 100 can be raised and lowered relative to a vessel 126 by rotation thereof.

The skilled person will appreciate that motion of the displacement means will cause forces to be exerted on to the measurement means that could affect the reading of the specific gravity / density. This may be a particular problem within liquids wherein the liquid moves within a tank in which the displacement means is provided. An example of such a situation would be within a tank in which a liquid is fermenting - bubbles of gas can disturb the liquid.

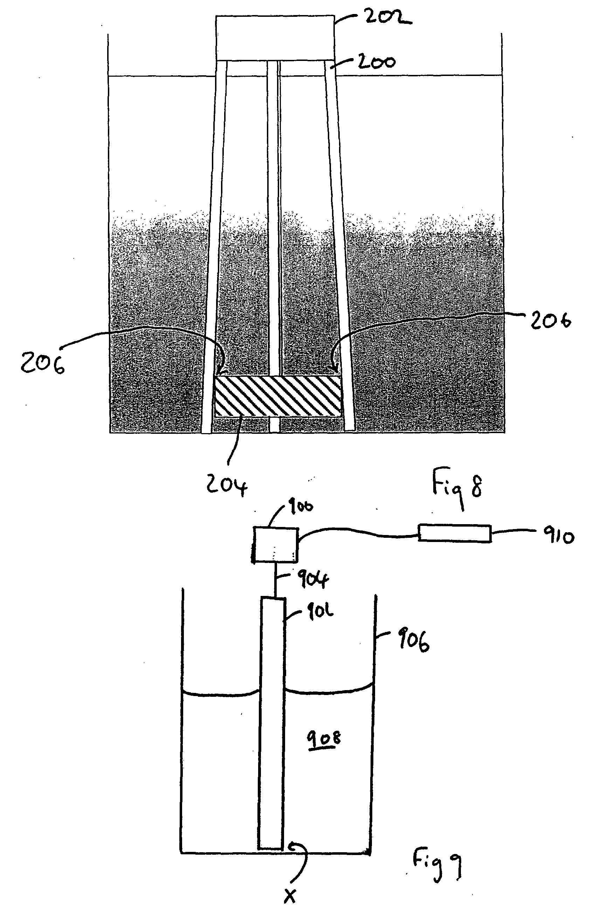

In such cases it is possible to restrain movement of the displacement means as shown in Figure 8. In this example a frame 200 supporting the specific gravity / density measuring apparatus 202 is arranged to have a close fit with the displacement means 204. That is, a gap 206 between the displacement means 204 and the support 200 is small so that there can be little lateral movement of the displacement means 204. The gap 206 must be such that the displacement means 204 can move vertically so that the change in buoyancy force can be transferred to the measurement means.

In this example the frame 200 is a tripod with legs arranged at 120°, and the displacement means 204 is a disc. Other arrangements of legs and shape of displacement means would equally be possible.

Figure 9 shows a further embodiment of the invention comprising a load cell 900 (or other mass measuring means) supporting a displacement means 902 by a wire, or the like. The displacement means 902 is suspended within a container 906, of known cross section, arranged to contain a liquid 908. The arrangement is such that there is minimal clearance X between the displacement means 902 and the base of the container 908. A readout 910 displays an output calculated as described below from the reading taken by the load cell 900.

In use, the displacement means 902 is suspended from the load cell 900, whilst the container 906 is empty. The readout 910 is reset so that it reads zero with just the displacement means 902 supported therefrom. A known mass of liquid is placed into the container, which provides buoyancy to the displacement means 902 so that the mass seen by the load cell 900 is reduced. As the mass of the liquid in the container 906 alters the display 910 alters accordingly to display the mass of the liquid still within the container.

If the dimensions of the container and the density of the liquid are known then the depth of the liquid can be calculated. (It will be appreciated that if the cross sectional area of the container 906 is non-uniform that a compensation will need to be applied to correctly calculate the depth of the liquid).

An advantage of this arrangement is that the mass of the liquid in the container 906 can be determined in a manner that is independent to the density and temperature of the liquid.

It is appreciated that certain features of the invention, which are for clarity, described in the context of separate embodiments, may also be provided in a single embodiment. Conversely, various features of the invention which are, for brevity, described in the context of a single embodiment, may also be provided separately or in any suitable subcombination.

**Claims**

1. An apparatus arranged to measure specific gravity / density of a quantity of fluid, comprising a displacement means arranged to be suspended into the fluid such that it is completely submerged and displaces a portion of the fluid, a weight measuring means arranged to measure the resultant force exerted by the displacement means and a processing means arranged to process the resultant force and produce a reading of the specific gravity / density for the fluid.

2. An apparatus according to claim 1 wherein the apparatus comprises a temperature measuring means arranged to measure the temperature of the fluid and provide the fluid temperature to the processing means.

3. An apparatus according to claim 1 or 2 which comprises a container arranged to hold the fluid.

4. An apparatus according to any one of the preceding claims wherein the displacement means comprises a roughly spherical body.

5. An apparatus according to any one of the preceding claims wherein the displacement means has a volume which is roughly ten raised to an integer X number of cl (where X is any integer).

6. An apparatus according to any claim dependent directly, or indirectly from claim 2 wherein the output from the temperature measuring means is input to the processing means and the processing means arranged to output a signal from which a temperature compensated specific gravity / density can be determined.

7. An apparatus according to any claim dependent directly, or indirectly from claim 2 wherein the apparatus is arranged to measure the specific gravity / density of a fluid at a first temperature and to provide as an output the specific gravity / density of that fluid a second, different, temperature.

8. An apparatus according to any one of the preceding claims wherein the apparatus is arranged to measure the specific gravity / density of a flowing fluid.

9. An apparatus according to claim 8 wherein one or more shields are provided arranged to shield the displacement means from forces exerted by the flowing fluid.

10. A method of measuring the specific gravity / density of a fluid comprising providing a quantity of fluid to be measured, suspending a displacement means into the fluid such that it is submerged, measuring the resultant force exerted by the displacement means and calculating the specific gravity / density of the liquid.

11. A method according to claim 10 comprising measuring the temperature of the fluid.

12. A method according to claim 11 wherein the specific gravity / density can be measured at a first temperature and calculated at a second different temperature.

13. A method according to any one of claims 10 to 12 wherein the method comprises using a displacement means having a volume roughly ten raised to an integer X number of cl (where X is any integer).

14. A method according to any one of claims 10 to 13 wherein a range of displacement means are provided allowing a number of ranges of specific gravity / density to be measured.

15. A fluid specific gravity / density measuring apparatus comprising a body arranged to held in a user's hand, said body having a displacement means support member extending therefrom with a displacement means on an end opposite the body the apparatus being arranged to provide a reading of the specific gravity / density when the displacement means is submerged into a fluid.

16. An apparatus according to claim 15 wherein a temperature sensing means is provided and arranged to measure the temperature of a fluid in which the displacement means is submerged.

17. An apparatus according to claim 15 or 16 wherein an input means is provided and arranged to allow a desired temperature to be input to the apparatus.

18. A method of measuring the specific gravity / density of a fluid comprising providing a hand-held apparatus with a displacement means extending therefrom, arranging for the displacement means to be submerged into the fluid, and measuring the force exerted on the apparatus by the fluid displaced by the displacement means.

19. An apparatus arranged to measure the mass of a quantity of fluid held in a container, comprising a displacement means arranged to be suspended into the fluid such that a portion of the displacement means is submerged and displaces a portion of the fluid, a weight measuring means arranged to measure the resultant force exerted by the displacement means and a processing means arranged to process the resultant force and produce a reading of the mass of the fluid.

FIG. 1.

FIG. 2.

FIG. 3.

Fig. 4

Fig 5

Fig 6

Fig 7

202

200

206

206

204

Fig 8

900

910

904

902

906

908

X

Fig 9